# FASCICULE DE BREVET EUROPEEN

(11) **EP 2 276 965 B1**
(45) Date de publication et mention de la délivrance du brevet: **07.11.2018**
(21) Numéro de dépôt: 09745738.6
(22) Date de dépôt: 12.05.2009
(51) Int. Cl.: C01B 3/00, F17C 11/00

(54) **PROCÉDÉ DE FABRICATION D'UN RÉSERVOIR D'HYDROGENE À HYDRURES MÉTALLIQUES**
VERFAHREN ZUR HERSTELLUNG EINES METALLHYDRIDSPEICHERTANKS FÜR WASSERSTOFF
METHOD OF MANUFACTURING A METAL-HYDRIDE HYDROGEN STORAGE RESERVOIR

(30) Priorité: 15.05.2008 FR 0853151
(43) Date de publication de la demande: 26.01.2011
(73) Titulaire: Commissariat à l'Énergie Atomique et aux Énergies Alternatives, 75015 Paris (FR); Centre National de la Recherche Scientifique, 75016 Paris (FR)
(72) Inventeur: GILLIA, Olivier, F-38360 Sassenage (FR); BOTZUNG, Maxime, F-38000 Grenoble (FR); LATROCHE, Michel, F-78210 Saint-Cyr L'Ecole (FR)
(74) Mandataire: Ilgart, Jean-Christophe
(86) Numéro de dépôt international: PCT/EP2009/055728
(87) Numéro de publication internationale: WO 2009/138406

(56) Documents cités:
- EP-A- 0 188 996
- EP-A- 1 286 406
- US-A1- 2002 056 715
- US-B1- 6 290 085

## Description

### DOMAINE TECHNIQUE

L'invention concerne un procédé de fabrication d'un réservoir de stockage d'hydrogène à hydrures métalliques.

Plus précisément l'invention concerne un procédé de fabrication d'un réservoir de stockage d'hydrogène dans une poudre d'hydrure métallique.

Le domaine technique de l'invention peut, de manière générale être défini comme celui du stockage de l'hydrogène en particulier le stockage de l'hydrogène utilisant des métaux ou alliage permettant le stockage de l'hydrogène sous la forme d'hydrures solides de ces métaux ou alliages.

Du fait de l'augmentation du prix du pétrole et de la diminution de ses réserves il apparaît de plus en plus que l'hydrogène pourrait constituer un carburant de remplacement intéressant.

En effet l'hydrogène est disponible de manière quasiment illimitée : il peut être produit à partir du charbon, du gaz naturel et d'autres hydrocarbures, mais aussi sans avoir recours à des combustibles fossiles, par simple électrolyse de l'eau en utilisant des énergies renouvelables, ou l'énergie nucléaire.

L'hydrogène est également un carburant d'un faible coût dont l'intérêt économique ira croissant avec la montée du prix du baril de pétrole.

L'hydrogène possède en outre la densité d'énergie par unité de poids la plus élevée parmi tous les combustibles chimiques et est pratiquement non polluant car le produit principal de sa combustion est l'eau.

Cependant un des inconvénients majeurs de l'hydrogène, en particulier lors de sa mise ne oeuvre pour la propulsion de véhicules est sa difficulté à être stocké.

Traditionnellement l'hydrogène a été stocké dans des réservoirs sous très hautes pressions, ou bien sous forme liquide à très basse température, ce qui nécessite un apport d'énergie important pour la pressurisation ou la liquéfaction.

Le stockage à haute pression ou basse température pose des problèmes importants en matière de sécurité car l'hydrogène est extrêmement inflammable, et toute fuite doit donc être évitée.

Par ailleurs, il est connu que certains métaux et alliages permettent le stockage et la libération réversibles de l'hydrogène sous la forme d'hydrures solides de ces métaux ou alliages.

Le stockage de l'hydrogène sous la forme d'hydrures solides présente une grande efficacité du fait de la densité de stockage volumétrique plus élevée qu'il assure lorsqu'on le compare au stockage sous la forme d'un gaz comprimé dans des réservoirs sous pression, ou d'un liquide.

Le document EP0188996 décrit un réservoir de stockage d'hydrogène sous forme d'hydrure métallique, l'adsorbant étant réparti dans des boîtes dont les parois sont flexibles afin de s'adapter aux changements de volume de l'adsorbant.

Le stockage de l'hydrogène sous la forme d'hydrures solides cause également moins de problèmes de sécurité que le stockage de l'hydrogène sous la forme d'un liquide ou d'un gaz dans des réservoirs.

Le métal ou l'alliage solide peut stocker de grandes quantités d'hydrogène en absorbant l'hydrogène avec une densité volumique élevée, et en formant un hydrure dans des conditions spécifiques de température et de pression, et l'hydrogène peut être libéré en changeant ces conditions.

A l'heure actuelle, les réservoirs, conteneurs, de stockage de l'hydrogène mettant en oeuvre des hydrures métalliques sont tous d'une conception identique du point de vue de la mise en place du matériau stockant l'hydrogène dans le conteneur et de l'échangeur thermique faisant partie de ce réservoir, conteneur.

Ce matériau stockant l'hydrogène se présente sous forme de poudre et il est inséré dans le conteneur qui est conçu de telle manière qu'il puisse résister à la pression d'hydrogène nécessaire à son fonctionnement.

Pour les réservoirs les plus performants, la poudre est placée dans des structures métalliques de géométries plus ou moins complexes afin de faciliter les échanges thermiques inhérents à l'endo- ou l'exo-thermicité de la réaction d'hydruration.

En effet si l'on considère une poudre métallique M, on a formation d'un hydrure métallique quand l'hydrogène H₂ pénètre dans la matrice métallique pour former l'hydrure MHₓ.

La formation de l'hydrure métallique engendre un dégagement de chaleur qu'il faut évacuer si l'on veut obtenir un chargement d'hydrogène rapide, car une élévation de la température inhibe l'absorption d'hydrogène.

Un réservoir de stockage d'hydrogène sur hydrure comporte donc une partie destinée à la gestion des échanges de chaleur, qui comprend un échangeur thermique à convection forcée ou non.

La façon dont est conçu et disposé cet échangeur thermique est très importante vis-à-vis des cinétiques d'absorption ou désorption attendues lors du stockage de l'hydrogène dans le métal ou l'alliage, et lors du déstockage de l'hydrogène à partir de l'hydrure du métal ou de l'alliage.

Comme le montre le schéma 1 suivant : lors du stockage se produit une réaction exothermique et de la chaleur est libérée, et lors du déstockage se produit une réaction endothermique et de la chaleur doit être fournie à l'hydrure de métal ou d'alliage.

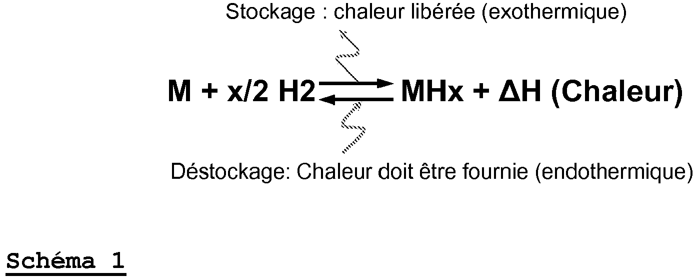

Lors de la construction de tels réservoirs, la structure de l'échangeur est d'abord assemblée à l'intérieur du réservoir en pression, puis le matériau de stockage, à savoir le métal ou l'alliage, est introduit sous forme de poudre dans la structure de l'échangeur, qui comporte généralement de multiples cellules, par un ou plusieurs orifices de remplissage. Le remplissage se fait par écoulement granulaire gravitaire. L'écoulement de la poudre peut être aidé par la mise en vibration du système.

Cette technique est difficilement maîtrisable à cause des problèmes d'écoulement de la poudre.

De plus les taux de remplissage c'est-à-dire les quantités de matériaux dans chaque cellule à remplir sont assez aléatoires et quasiment impossible à contrôler.

En outre la poudre lors des manipulations qu'elle subit, risque très fortement d'être polluée, oxydée par l'atmosphère environnante.

Le document [1] décrit un réservoir comprenant un échangeur de chaleur tube-ailettes en aluminium inséré dans un conteneur résistant à la pression de gaz. La poudre d'hydrure est certainement versée entre les ailettes par voie gravitaire. L'homme du métier des matériaux granulaires sait que cette répartition ne sera pas parfaitement uniforme.

Le document [2] est relatif à un réservoir de stockage de l'hydrogène comprenant une enceinte à double paroi munie de serpentins de chauffage pour contrôler la désorption, et d'une isolation, qui comprend un tube de refroidissement alimenté en ammoniac et pourvu d'ailettes pour contrôler l'absorption d'hydrogène.

Le réservoir est rempli d'une poudre d'hydrure métallique non précisée.

Le procédé de fabrication de ce réservoir n'est pas décrit en détail mais il est certainement tel que décrit plus haut.

Les documents [3] et [4] ont trait à des réservoirs à hydrure comprenant un échangeur, un système d'amenée des fluides eau et hydrogène, et une enveloppe résistant à la pression de fonctionnement.

L'intérieur du réservoir est divisé en compartiments, dont chacun contient une matrice en un matériau tel qu'une mousse d'aluminium formant des cellules dans lesquelles sont placées des particules d'hydrure de métal broyé.

Le procédé de fabrication de ce réservoir est complexe, long et couteux.

Le document [5] décrit un système de vibration bi-axiale pour faire s'écouler une poudre d'hydrure dans un réservoir avec échangeur de chaleur. Le procédé mettant en oeuvre ce système est long et très difficilement maîtrisable. Le remplissage par la poudre d'hydrure est irrégulier, et n'est pas uniforme sur l'ensemble du réservoir.

Une autre technique de fabrication existe. Elle consiste à fabriquer des comprimés par compaction de la poudre et à les assembler sur les tubes d'un échangeur thermique. Il est également possible de compacter simultanément (« cocompacter ») la poudre telle qu'une poudre d'alanate avec des cylindres de mousse aluminium.

Ainsi, le document [6] décrit un réservoir dans lequel de la poudre d'hydrure NaAlH₄ est compactée simultanément (« cocompactée ») avec une mousse d'aluminium. Le comprimé est traversé par un système de refroidissement et d'amenée d'hydrogène.

Là encore le procédé de fabrication du réservoir, est complexe, long et couteux.

Il ressort de ce qui précède qu'il existe un besoin pour un procédé de fabrication d'un réservoir de stockage d'hydrogène mettant en oeuvre une poudre d'hydrure métallique qui soit, simple, fiable, maîtrisable, reproductible, facile à mettre en oeuvre, qui comporte un nombre limité d'étapes et qui soit d'un coût peu élevé.

Il existe notamment un besoin pour un tel procédé qui permette une répartition régulière de l'hydrure métallique dans le réservoir, et une maitrise du taux de remplissage afin d'obtenir des taux de remplissage précis, parfaitement définis et non aléatoires.

Il existe en outre un besoin pour un tel procédé de fabrication d'un réservoir de stockage d'hydrogène qui permette d'obtenir un réservoir présentant une efficacité thermique élevée, c'est-à-dire incluant un échangeur de chaleur complexe dans lequel l'hydrure est inséré.

Il existe aussi un besoin pour un procédé de fabrication d'un réservoir de stockage d'hydrogène à poudre hydrure métallique dans lequel la pureté de la poudre soit préservée au cours du procédé.

Il existe par ailleurs des difficultés pour activer les hydrures et fabriquer des poudres d'hydrure par "décrépitation".

La décrépitation est connue de l'homme de métier comme le processus par lequel l'hydrogène, en s'insérant dans un morceau dense de matériau hydrure réduit celui-ci en poudre par éclatement de ce morceau en une multitude de petits morceaux formant une poudre. Selon la taille du morceau à réduire en poudre, ceci ne se fait qu'en plusieurs cycles d'hydruration dehydruration.

Au bout d'un certain nombre de cycles -assez réduit à partir du moment où la réaction d'hydruration a pu s'amorcer, par exemple de 5 à 10 cycles pour des morceaux centimétriques par exemple- la taille de ces grains de poudre se stabilise.

Il est parfois très difficile d'amorcer cette activation du fait de la présence d'une couche polluée en surface des morceaux ou grains de poudre.

Des procédés complexes sont utilisés pour activer les poudres, comme celui décrit dans le document de Latroche [7].

Dans le procédé exposé dans ce document, le matériau est soumis a plusieurs cycles thermiques à diverses vitesses de chauffage et refroidissement, pour certains sous hydrogène, et dans des intervalles de température qui se situent en dehors de ceux mis en oeuvre lors d'une utilisation classique de l'hydrure.

Le but de la présente invention est, entre autres, de fournir un procédé de fabrication d'un réservoir de stockage d'hydrogène dans une poudre d'hydrure métallique qui réponde notamment aux besoins énumérés plus haut.

Le but de la présente invention est encore de fournir un procédé de fabrication d'un réservoir de stockage d'hydrogène dans une poudre d'hydrure métallique qui ne présente pas les inconvénients, défauts, limitations, et désavantages des procédés de l'art antérieur, et qui résolve les problèmes de l'art antérieur.

Ce but et d'autres encore sont atteints, conformément à l'invention par un procédé de fabrication d'un réservoir de stockage d'hydrogène dans une poudre d'hydrure métallique, comprenant une enceinte fermée divisée en cellules élémentaires fermées définies par des parois, chacune des cellules contenant de la poudre d'hydrure métallique, caractérisé en ce que l'on fabrique successivement chacune des cellules en réalisant les étapes a), b) et c) suivantes :
a) on assemble certaines, mais non toutes les parois définissant la cellule pour former ainsi une cavité ou alvéole ouverte ; puis
b) on place un, ou plusieurs morceau(x) massif(s) d'un matériau susceptible de former un hydrure métallique dans ladite cavité ou alvéole, le volume du (des) morceau(x) massif(s) étant tel qu'il(s) laisse(nt) un espace libre dans la cellule; puis
c) on assemble les dernières parois définissant la cellule pour fermer celle- ci ;
d) on répète les étapes a), b), c) le nombre de fois nécessaires pour fabriquer toutes les cellules de l'enceinte ; chaque cellule étant pourvue d'un ou de plusieurs orifices pratiqués dans ses parois pour faire entrer ou sortir l'hydrogène dans la cellule; puis
e) on ferme l'enceinte ;
f) on introduit de l'hydrogène dans l'enceinte moyennant quoi on transforme le ou les morceau(x) massif(s) de matériau dans chacune des cellules en la poudre d'hydrure métallique ;
g) on répète éventuellement l'étape f) ;
les étapes b), c), d) et e) étant réalisées sous une atmosphère protectrice, dans une enceinte fermée telle qu'une boîte à gants par exemple.

Par atmosphère protectrice, on entend généralement une atmosphère non oxydante, non humide, par exemple une atmosphère de gaz inerte tel que l'argon, l'azote, ou leurs mélanges.

Le procédé selon l'invention se distingue fondamentalement des procédés de fabrication de réservoir de stockage d'hydrogène à hydrures métalliques de l'art antérieur en ce que l'on place dans chacune des cellules individuelles, élémentaires de l'enceinte du réservoir un, ou plusieurs morceau(x) massif(s), par exemple un morceau de matériau susceptible de former un hydrure métallique, qui est ensuite transformé par hydrogénation en poudre d'hydrure, et non directement une poudre d'hydrure métallique.

En mettant en oeuvre, conformément à l'invention des morceaux massifs tels que des lingots de métal ou d'alliage métallique et non une poudre d'hydrure de métal ou d'alliage métallique, la fabrication, le montage du réservoir se trouvent grandement facilités, sa durée est raccourcie et son coût est également réduit.

En effet des morceaux massifs sont beaucoup plus faciles à manipuler qu'une poudre et en outre il ne se produit aucune perte de matière et aucune pollution du voisinage du procédé.

Le procédé selon l'invention est simple fiable, maîtrisable et reproductible.

Le taux de remplissage, à savoir la quantité de matériau dans chaque cellule à remplir est parfaitement maîtrisé, et il en est de même du taux de remplissage global du réservoir.

Le remplissage du réservoir est parfaitement uniforme, homogène, totalement contrôlé, maîtrisé et nullement aléatoire comme dans les procédés de l'art antérieur.

En outre le réservoir final obtenu, du fait de son procédé de fabrication, est facilement adaptable pour l'obtention d'une efficacité thermique supérieure et est beaucoup plus facile à mettre en oeuvre.

Un autre avantage capital du procédé selon l'invention est que ce procédé évite les manipulations d'une poudre d'hydrure qui est très sensible à l'oxydation, et/ou la pollution de la surface des grains par l'eau.

Outre, le fait que le procédé proposé évite les manipulations délicates de poudre, il présente aussi l'avantage qu'il est très facile de nettoyer la surface d'un morceau massif (pour permettre l'amorçage de l'hydruration) alors qu'il est impossible de le faire sur chacun des grains d'une poudre.

Une poudre présente en effet toujours une surface spécifique bien plus importante qu'un solide de même masse, et est donc extrêmement plus sensible à une pollution en surface des grains. Une poudre polluée voit son potentiel de stockage et ses cinétiques d'absorption fortement diminuées, voire annulées. Un matériau massif tel qu'un lingot a une surface spécifique bien moins importante, il est donc beaucoup moins sensible à l'action de l'atmosphère lors des manipulations et il est beaucoup plus facile à nettoyer.

En outre le matériau placé dans les cellules est un métal ou un alliage de métal qui est beaucoup moins sensible à l'oxydation qu'un hydrure qui plus est sous forme de poudre.

C'est donc aussi bien la forme (massive et non pulvérulente) du matériau utilisé dans le procédé que sa nature (métal ou alliage de métaux et non hydrure métallique) qui sont avantageuses dans le procédé selon l'invention.

On peut dire que le procédé selon l'invention met à profit une des propriétés des matériaux constituants les hydrures métalliques pour faciliter le montage, la fabrication et la mise en oeuvre des réservoirs de stockage d'hydrogène dans des hydrures métalliques.

En effet, les poudres d'hydrures métalliques peuvent s'obtenir par décrépitation d'un métal ou d'un alliage métallique massif (elles peuvent aussi être obtenues par concassage du matériau massif, mais ce cas ne nous intéresse pas ici).

La décrépitation comme on l'a déjà indiqué plus haut, est le phénomène selon lequel, en quelques cycles d'hydrogénation, le matériau métallique, métal ou alliage, sous forme de lingot va se briser en petits grains, sous l'effet du gonflement intrinsèque du matériau dû à l'insertion des atomes d'hydrogène dans la maille cristalline du métal ou de l'alliage métallique ; il en résulte une poudre d'hydrure de métal ou d'alliage de métal dont la taille de grain s'équilibre généralement autour de quelques micromètres.

De manière générale on peut considérer que le procédé selon l'invention consiste à introduire des pièces massives appelées morceaux massifs directement dans les cellules du réservoir à hydrogène plutôt que de la poudre.

Les parois de ces cellules forment généralement un échangeur thermique pour amener de la chaleur au, ou évacuer de la chaleur à partir du, matériau.

Les morceaux massifs sont introduits dans des cavités disposant de l'espace nécessaire au changement de volume inhérent à la transformation en poudre, le but étant qu'une fois le matériau transformé en poudre, il soit de préférence en contact avec toutes les parois de chaque cellule ce qui a pour effet d'optimiser l'efficacité thermique, mais que les parois ne soient pas déformées, modifiées, repoussées.

Le ou les morceau(x) massif(s) du matériau susceptible de former un hydrure métallique peut(peuvent) présenter la forme d'un polyèdre.

Le ou les morceau(x) massif(s) du matériau susceptible de former un hydrure métallique a de préférence la forme d'un parallélépipéde, de préférence encore d'un parallélépipède rectangle, de dimensions compatibles avec les cellules.

Le ou les morceau(x) massif(s) d'un matériau susceptible de former un hydrure métallique peut(peuvent) être découpé(s) à partir d'un bloc, lingot massif de plus grande taille par exemple d'une taille de 50x50x100 mm, à des dimensions adaptées à chaque cavité, de préférence dans une atmosphère protectrice, contrôlée, telle que définie plus haut, à savoir non oxydante et non humide.

Dans la présente, on désigne généralement par « lingot », un bloc de matériau tel qu'un métal, brut de fonderie.

On désigne généralement par « morceau », un bloc de matériau, tel qu'un métal, découpé, taillé dans un lingot.

Ce morceau a comme on l'a mentionné plus haut généralement une forme polyédrique, de préférence parallélépipédique.

Selon une caractéristique particulièrement avantageuse du procédé selon l'invention, le ou les morceau(x) massif(s) du matériau susceptible de former un hydrure métallique est(sont) soumis à un usinage mécanique dans une atmosphère protectrice avant qu'on le(les) place dans la cavité ou alvéole (à savoir préalablement à l'étape b)).

Cet usinage mécanique peut être un meulage, un tronçonnage, un découpage, un grattage, un décapage, un limage, un tournage, un fraisage, un ponçage ou une combinaison de ceux-ci.

De manière étonnante, cet usinage mécanique tel qu'un simple grattage ou décapage permet d'activer et de faire décrépiter un morceau de matériau susceptible de former un hydrure métallique, de manière extrêmement simple, sans qu'il soit nécessaire d'avoir recours à des opérations d'activation complexes telles que celles décrites dans le document [7] mentionné plus haut.

Il est extrêmement surprenant que l'on parvienne à activer en vue de sa décrépitation le matériau par un simple usinage mécanique, par exemple par un simple grattage ou décapage de la surface du matériau.

Cette activation bien que beaucoup plus simple que les procédés complexes d'activation par exemple avec cyclage thermique connus donne d'excellents résultats.

Le matériau susceptible de former un hydrure métallique peut être choisi parmi tous les matériaux présentant des propriétés d'hydruration, à la condition qu'ils soient initialement obtenus à l'état non hydruré sous forme de blocs solides. On pourra se référer à cet égard au document [8].

Le matériau susceptible de former un hydrure métallique peut être choisi notamment parmi les composés intermétalliques AB5, AB2, A2B, AB3, A2B7, A2B17, comme les TiFe, LaNi5, Mm-Ni, Ti-Cr, CaNi5, Ti-Cr, Ti-Mn, Zr-Mn, Ti-Mn-V, Zr-Fe-Cr, Ti-Zr-V, Ti-Fe-Mn, Ti-Fe-Ni ; les matériaux en solution solide à structure BCC par exemple dans le Vanadium tels que V-Ti-Fe, ou V-Ti-Cr ; les métaux purs tels Mg, Be, Ti, Zr, V, La, U, Y ; les alliages de métaux comme les alliages de magnésium tels que Mg-Ni, Mg-Cu ; et les mélanges de deux matériaux, ou plus, parmi les matériaux énumérés dans ce qui précède.

Il est cependant à noter que pour les métaux purs, leurs conditions d'utilisation à hautes température et pression d'équilibre ne sont pas les mieux adaptées au fonctionnement d'un réservoir.

Le choix de l'espace libre à laisser dans chaque cellule va dépendre du gonflement intrinsèque de la poudre qui, lui-même, dépend du matériau.

Le choix de l'espace libre dépend aussi de la densité de poudre désirée (masse divisée par volume) dans chaque cellule, à savoir dans chaque cavité de l'échangeur. Cette densité est parfaitement contrôlable grâce au procédé selon l'invention. La densité va conditionner la conductivité thermique et la manière dont la poudre va pousser sur les parois des cellules, cavités lors du gonflement accompagnant l'hydruration, mais sans déformer les parois. Ces effets dépendent de la nature de la poudre hydrure. L'espace vide doit donc être adapté en fonction du matériau constitutif de la poudre hydrure.

L'espace vide est généralement choisi de façon à ce que la décrépitation n'entraîne aucune déformation des parois de chaque cellule et que l'expansion de l'hydrure soit contenue par les parois des cellules sans que les parois ne soient déformées, repoussées. En d'autres termes, chaque cellule conserve sa forme et son volume initial, à l'issue de la décrépitation.

L'espace libre dans chaque cellule représente généralement au moins 20% du volume de la cellule, de préférence de 20 à 50%, de préférence encore de 20 à 30%. Le ou les morceau (x) massif (s) occupe(ent) le volume restant de la cellule, par exemple de 70 à 80%.

A l'issue de la « décrépitation » la poudre d'hydrure métallique est de préférence en contact avec toutes les parois de la cellule élémentaire qui la contient, mais avantageusement sans que les parois n'aient été déformées ou repoussées et sans donc que le volume initial de la cellule élémentaire, ni sa forme ne soient modifiés.

L'ensemble des parois des cellules forme de préférence un échangeur thermique et, chaque cellule définit donc une cavité de l'échangeur. En d'autres termes, les parois des cellules sont par exemple les ailettes d'un échangeur de chaleur inséré dans l'enceinte fermée.

Le procédé peut également comprendre une étape de montage de canalisations, d'amenée et d'évacuation de l'hydrogène, et une étape de montage de canalisations de transport d'un fluide caloporteur.

D'autres avantages du procédé selon l'invention apparaîtront à la lecture de la description détaillée qui suit faite à titre illustratif et non limitatif en relation avec les dessins joints dans lesquels :

La figure 1 est une représentation schématique du procédé selon l'invention ou plus précisément des étapes f) et g) de celui-ci.

La figure 2 est également une représentation schématique du procédé selon l'invention, ou plus exactement des étapes f) et g) de celui-ci, dans laquelle on a indiqué les systèmes d'amenée de d'hydrogène et du fluide caloporteur chargé de régler la thermique du réservoir.

Le procédé selon l'invention est un procédé de fabrication d'un réservoir de stockage d'hydrogène dans une poudre d'hydrure métallique, comprenant une enceinte fermée divisée en cellules élémentaires fermées (1) définies par des parois (2, 3, 4, 5), chacune des cellules (1) contenant de la poudre d'hydrure métallique.

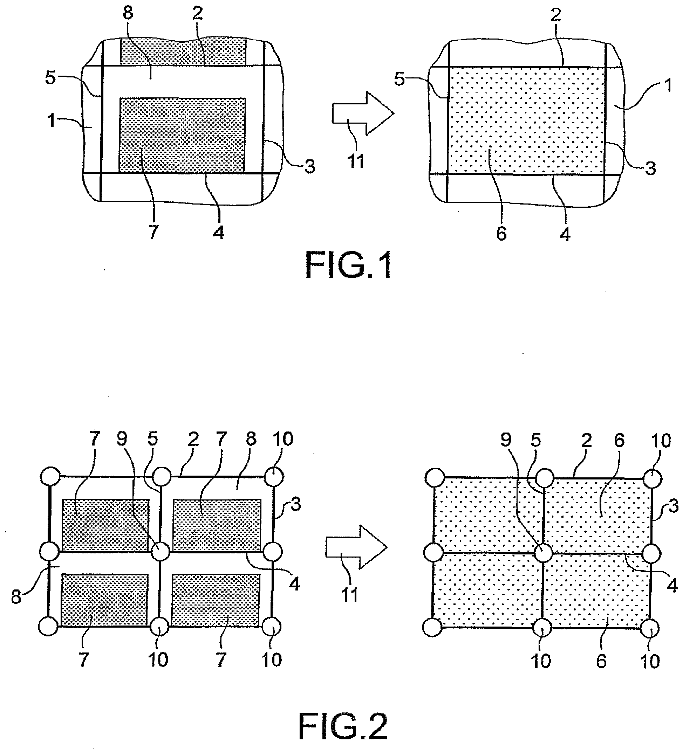

Ainsi sur la figure 1 apparaît l'une de ces cellules, tandis que sur la figure 2 sont représentées 4 de ces cellules.

L'ensemble des parois définissant les cellules élémentaires forme un échangeur thermique destiné à amener de la chaleur au matériau se trouvant à l'intérieur des cellules et/ou à évacuer de la chaleur à partir de ce matériau.

Les parois (2, 3, 4, 5) peuvent être creuses, et peuvent être parcourues par un fluide caloporteur et/ou ces parois peuvent être les ailettes d'un échangeur de chaleur placé dans l'enceinte fermée.

Dans ce qui suit, pour simplifier, on désignera donc par « échangeur » l'ensemble formé par toutes les cellules élémentaires et les parois définissant ces cellules.

Cet échangeur est lui-même placé dans une enceinte fermée formant le réservoir.

Le procédé selon l'invention peut par exemple se dérouler de la manière décrite ci-dessous.

On construit l'échangeur par assemblage de pièces généralement métalliques.

Le métal ou alliage constituant l'échangeur et donc les parois des cellules élémentaires de celui-ci a de préférence de bonnes propriétés de conductivité thermique.

Ce métal ou alliage peut être choisi parmi l'aluminium et ses alliages, et l'acier inoxydable (316L par exemple) qui est moins bon conducteur mais parfois plus compatible physico-chimiquement avec les matériaux hydrure du réservoir.

Les cellules élémentaires (1) peuvent avoir une forme quelconque, par exemple les cellules élémentaires pourront avoir la forme de polyèdres, par exemple de parallélépipèdes, de préférence de parallélépipèdes rectangles.

Il est avantageux que les cellules (1) aient une forme analogue aux morceaux, blocs de matériau qu'elles reçoivent afin de faciliter le montage.

De même la taille desdites cellules (1) peut être variable, dans le cas où ces cellules ont la forme de parallélépipèdes rectangles ces derniers pourront avoir une taille de 25x25x50 mm, ou inférieure comme 20x20x40 mm, voire 10x10x20 mm, voire encore plus petite comme 2x2x4 mm.

Les cellules (1) peuvent en effet être plus ou moins grandes suivant le compromis efficacité thermique et masse du système réservoir désiré.

Toutes les cellules (1) peuvent avoir la même forme et éventuellement la même taille ou bien les cellules (1) peuvent différer par leur forme et/ou leur taille.

C'est précisément l'un des avantages du procédé selon l'invention que de permettre la fabrication d'échangeurs thermiques de géométries complexes, plus complexe notamment que la géométrie des échangeurs fabriqués par les procédés de l'art antérieur. Les échangeurs préparés par le procédé selon l'invention présentent ainsi des géométries qui sont plus adaptées à l'optimisation des échanges thermiques ce qui permet d'améliorer l'efficacité thermique du réservoir.

La fabrication de réservoirs contenant des échangeurs de géométries complexes est possible selon le procédé de l'invention grâce au fait que la contrainte du remplissage par de la poudre est évitée puisque le matériau absorbant l'hydrogène est fourni sous la forme de blocs, morceaux (7) que l'on peut facilement placer au cours même de la fabrication dans chacune des cellules. Le matériau se trouve donc aisément réparti dans l'ensemble du réservoir.

Au cours du montage, l'assemblage de l'échangeur laisse apparaître des cavités ou alvéoles.

Par cavité, alvéole on entend une cellule élémentaire non fermée, en d'autres termes une cellule dont une ou plusieurs des parois (2, 3, 4, 5) qui la définissent n'ont pas encore été assemblées.

Dans chaque alvéole, cavité (1) un ou plusieurs morceau(x), bloc(s) (7) de matériau susceptible de former un hydrure métallique est(sont) introduit(s), comme illustré sur la Figure 1 à gauche et sur la figure 2, à gauche.

Sur la figure 1 et la figure 2, on a représenté un seul morceau, bloc, dans chaque alvéole mais il est bien évident que plusieurs morceaux peuvent être introduits dans chaque alvéole.

Le matériau susceptible de former un hydrure métallique peut être choisi parmi tous les matériaux présentant des propriétés d'hydruration, à la condition qu'ils soient initialement obtenus à l'état non hydruré sous forme de blocs solides. On pourra se référer à cet égard au document [8]. Ce matériau peut être choisi parmi les composés intermétalliques AB5, AB2, A2B, AB3, A2B7, A2B17, comme les TiFe, LaNi5, Mm-Ni, Ti-Cr, CaNi5, Ti-Cr, Ti-Mn, Zr-Mn, Ti-Mn-V, Zr-Fe-Cr, Ti-Zr-V, Ti-Fe-Mn, Ti-Fe-Ni ; les matériaux en solution solide à structure BCC, par exemple dans le Vanadium, tels que V-Ti-Fe, ou V-Ti-Cr ; les métaux purs tels Mg, Be, Ti, Zr, V, La, U, Y ; les alliages de métaux comme les alliages de magnésium tels que Mg-Ni, Mg-Cu ; et les mélanges de deux matériaux, ou plus, parmi les matériaux énumérés dans ce qui précède.

Dans ce qui précède, Mm désigne le « Mischmetal ».

Le terme « Mischmetal » est un terme bien connu de l'homme du métier dans ce domaine de la technique. Le « Mischmetal » est un alliage qui consiste en un mélange brut de Cérium, Lantane, Néodyme et d'autres métaux des terres rares dans les proportions approximatives dans lesquelles ils sont naturellement présents dans le minerai.

On rappelle que les différents matériaux de stockage d'hydrogène offrent différentes capacités d'absorption de l'hydrogène en fonction des pressions et des températures utilisées.

Le matériau susceptible de former un hydrure métallique se présente selon l'invention sous la forme de morceaux, blocs massifs (7).

Par morceau, bloc massif (7) on entend que le matériau se présente sous la forme de morceaux discrets, individuels dont la dimension est très largement supérieure à celle des grains d'une poudre.

A titre d'exemple les lingots, blocs à partir desquels sont obtenus les morceaux, blocs introduits dans les alvéoles ont généralement une taille définie par leur plus grande dimension de quelques millimètres à quelques mètres suivant le creuset dans lequel on les a obtenus, et les morceaux, blocs massifs (7) obtenus par découpe de ces lingots ont généralement une taille définie par leur plus grande dimension de l'ordre du mm à quelques mm, plus particulièrement entre 1 et 10 mm, alors qu'une poudre de ce même matériau comporte des grains d'une taille généralement de 0,5 à 10 µm.

Par massif on entend que les morceaux, blocs (7) du matériau sont compacts et ne sont pas notamment constitués par l'agglomération de plusieurs particules, par exemple par le compactage d'une poudre comme cela est parfois le cas dans l'art antérieur.

Les morceaux du matériau susceptible de former un hydrure métallique peuvent se présenter sous une forme quelconque mais ils se présentent généralement sous la forme de polyèdres, plus précisément sous la forme de parallélépipèdes comme cela est représenté sur les figures 1 et 2, de préférence sous la forme de parallélépipèdes rectangles, par exemple d'une taille de 10x10x20 mm ou encore 2x2x5 mm que l'on désigne donc généralement sous le nom de morceaux.

Le matériau peut être reçu sous la forme de lingots de grande taille (par exemple 50x50x100 mm, ou même 100x100x200 mm) généralement obtenus par fonderie, à partir desquels on découpe chaque morceau aux dimensions adaptées à chaque cavité.

Le caractère massif des morceaux, blocs est aussi reflété par le fait qu'ils sont obtenus à partir de blocs, morceaux, lingots, de plus grande taille et non par assemblage, compactage de granulés, particules, par exemple par compactage d'une poudre, ou encore par agglomération de morceaux.

Le découpage des morceaux, blocs se fait de préférence dans une enceinte à atmosphère protectrice contrôlée non oxydante et protectrice de la surface des échantillons.

Ce découpage peut se faire par tout moyen classique, conventionnel d'usinage, par exemple tronçonnage, tournage, fraisage, meulage,....

II est préférable que les faces non usinées, c'est-à-dire les surface des lingots bruts de fonderie, soient, par exemple, légèrement grattées, ou décapées avec des dispositifs abrasifs, lors d'une opération de meulage, ponçage au papier abrasif par exemple, afin de faire apparaître du matériau non corrodé en surface.

En effet, il est important selon l'invention que les morceaux polyédriques soient débarrassés de leur couche d'oxyde -empêchant le début de l'hydruration- par usinage mécanique.

Cet usinage mécanique doit se faire sous atmosphère protectrice de préférence dans la même enceinte fermée, telle qu'une boîte à gants, que le montage du réservoir.

L'usinage mécanique se fera de préférence par meulage, du fait de la nature souvent très dure des matériaux hydrures ou par tronçonnage, découpage par exemple au disque abrasif (diamanté par exemple), ou par un grattage ou décapage au papier abrasif ou simplement à la lime.

Il est à noter que ces opérations d'usinage mécanique par exemple de meulage, tronçonnage, découpage, peuvent être confondues, en totalité ou en partie, avec les opérations de découpage par exemple de meulage, tronçonnage, fraisage, tournage permettant de préparer, découper, les morceaux à partir des lingots.

Cette activation du matériau au moyen d'un usinage mécanique constitue une caractéristique préférée, avantageuse, du procédé de l'invention. En effet, beaucoup d'autres procédés d'"activation" de l'hydrure sont complexes et lourds à mettre en oeuvre (voir document de LATROCHE [7]). Il est surprenant de pouvoir activer (et faire se décrépiter) un morceau d'hydrure massif seulement, par exemple, en le grattant ou décapant sous atmosphère protectrice.

Il faut ensuite nécessairement que les morceaux soient gardés sous atmosphère protectrice, inerte jusqu'à fermeture du réservoir, qui se fera sous atmosphère protectrice encore.

L'espace vide, libre (8) à laisser dans chaque alvéole, puis dans chaque cellule, dépend de la densité relative de matériau hydrure souhaité dans chaque alvéole.

L'espace vide, libre (8) dans chaque cellule représente généralement au moins 20% du volume de la cellule, de préférence de 20 à 50%, de préférence encore de 20 à 30% du volume de la cellule.

A titre d'exemple, si l'on désire obtenir une porosité de 20 à 30% il convient de laisser un espace libre (8) de 20 à 30% du volume de l'alvéole dans chaque alvéole, le volume du ou des morceau(x) de matériau précurseur d'hydrure taillé(s) étant donc de 70 à 80% du volume de l'alvéole.

L'échangeur thermique est ainsi généralement construit en couches.

Au fur et à mesure du montage de l'échangeur thermique, les alvéoles dans lesquelles ont été introduits un ou des morceau(x) de matériau susceptible de former un hydrure sont fermées par les parois des alvéoles suivantes pour former ainsi des cellules fermées, ainsi de suite jusqu'aux surfaces extrêmes de la géométrie de l'échangeur.

Il en résulte un échangeur thermique constitué de cellules (1) remplies de morceau(x) de matériau susceptible de former un hydrure, ces cellules ne comportant pas d'orifices de remplissage de poudre. Il faut seulement généralement prévoir quelques petits trous, orifices (non représentés) dans les parois (2, 3, 4, 5) des cellules (1), pour laisser entrer ou sortir l'hydrogène de chaque cellule.

Des trous de quelques microns sont suffisants, ils empêchereront par la même occasion la poudre de s'échapper.

Un tube fait par exemple d'une poudre agglomérée et semi-frittée de particules d'inox convient par exemple parfaitement pour réaliser l'amenée d'hydrogène, cette méthode est connue de l'homme de métier.

La dimension de ces « petits » trous est ainsi sans commune mesure avec la dimension des orifices qui devraient exister pour faire passer de la poudre dans un réservoir fabriqué par un procédé classique.

Par « petits » trous, on entend généralement que les trous ont une dimension définie par leur diamètre, dans le cas de trous circulaires, de 1 à 1000 µm à comparer à la dimension des orifices de remplissage qui seraient par exemple de 1 à 5 mm.

Le réservoir contenant l'échangeur ainsi assemblé est alors fermé hermétiquement.

Sur la figure 2, on a représenté de manière schématique la préparation d'un réservoir par le procédé selon l'invention ou plus précisément les étapes d) à g) de ce procédé ; ce réservoir incluant un système d'amenée de l'hydrogène et du fluide caloporteur chargé de régler la thermique du réservoir.

Le système d'amenée d'hydrogène comprend un tube poreux (9), tandis que le système d'amenée du fluide caloporteur comporte des tubes non poreux (10).

Le montage d'un tel échangeur qui sera inclus dans un réservoir, c'est-à-dire dans un conteneur résistant à la pression d'hydrogène, se fait aussi par étage, les tubes d'amenée des fluides étant préalablement mis en place et les étages des plaques d'échangeur étant enfilés sur ces tubes.

Quelques cycles d'hydruration, par exemple de 5 à 10 cycles sont alors nécessaires pour finir la fabrication et la mise en condition du réservoir d'hydrogène (flèche 11).

Les cycles d'hydruration consistent à introduire de l'hydrogène dans le réservoir de préférence dans les conditions de température et pression adaptées au matériau hydrure choisi.

Pour le LaNi₅, l'introduction d'hydrogène à température ambiante à une pression de quelques bars peut par exemple convenir.

Pour un hydrure TiVFe, il faudra sans doute monter un peu plus haut en pression, aux alentours d'une centaine de bars, toujours à température ambiante.

Le matériau sera naturellement réduit en poudre dans chaque cavité, l'homme du métier parle de « décrépitation », et au bout de quelques cycles, par exemple de 5 à 10 cycles, le réservoir atteindra son fonctionnement optimum et stabilisé ; et la poudre d'hydrure (6) occupera alors la totalité du volume de chaque cellule (1) et sera en contact avec toutes les parois (2, 3, 4, 5) de chaque cellule (1), mais sans que les parois ne soient déformées, repoussées et sans que le volume de la cellule après décrépitation ne soit modifié par rapport au volume initial de la cellule.

Les applications possibles du procédé de fabrication d'un réservoir de stockage d'hydrogène selon l'invention concernent l'ensemble du champ d'application du stockage de l'hydrogène.

Le procédé selon l'invention peut donc être utilisé pour la fabrication de réservoirs destinés aux moyens de transports tels que bateaux, sous-marins, voitures, autobus, camions, engins de chantier, deux roues ainsi que dans le domaine des alimentations transportables en énergie telles les batteries pour appareils électroniques portables (téléphones portables, ordinateurs portables).

Les systèmes de stockage de l'énergie en plus grosse quantité et stationnaires sont aussi des applications potentielles, il s'agit notamment des groupes électrogènes, des dispositifs de stockage de l'hydrogène produit en grande quantité par des éoliennes, des panneaux photovoltaïques, la géothermie,....

### REFERENCES

[1] Daigoro Mori, Norihiko Haraikawa, « High-pressure Metal Hydride Tank for Fuel Cell Vehicles », IPHE International Hydrogen Storage Technology Conference 19-22 June 2005, Lucca, Italie.
[2] http://www.switch2hydrogen.com/
[3] L. K. Heung,"On-board Hydrogen Storage for a city Transit Bus", Westinghouse Savannah River Company, 1998
[4] US-A-6 015 041
[5] D. Mosher, X. Tang, S. Arsenault, B. Laube, M. Cao, R. Brown and S. Saitta, "High Density Hydrogen Storage System Demonstration Using NaAlH4 Complex Compound Hydrides", United Technologies Research Center, East Hartford, Connecticut, Project ID STP 33, DOE Hydrogen program, Annual peer review, Arlington VA, may 16, 2007.
[6] High Density Hydrogen Storage System Demonstration Using NaAlH4 Complex Compound Hydrides D.L. Anton D.A. Mosher, UTRC, DOE Merit Review; Arlington, 2005
[7] FR-A-2 894 598
[8] G. Sandrock, « A panoramic overview of hydrogen storage alloys from a gas reaction point of view", Journal of Alloys and Compounds 293-295 (1999) 877-888.

## Revendications

1. Procédé de fabrication d'un réservoir de stockage d'hydrogène dans une poudre d'hydrure métallique, comprenant une enceinte fermée divisée en cellules élémentaires fermées (1) définies par des parois (2, 3, 4, 5), chacune des cellules (1) contenant de la poudre d'hydrure métallique (6), **caractérisé en ce que** l'on fabrique successivement chacune des cellules (1) en réalisant les étapes a), b) et c) suivantes :
a) on assemble certaines, mais non toutes les parois définissant la cellule (1) pour former ainsi une cavité ou alvéole ouverte ; puis
b) on place un ou plusieurs morceau(x) massif(s) (7) d'un matériau susceptible de former un hydrure métallique dans ladite cavité ou alvéole, le ou les morceau(x) massif(s) du matériau étant compact(s) et n'étant pas notamment constitué(s) par l'agglomération de plusieurs particules, et le volume du ou des morceau(x) massif(s) (7) étant tel qu'il(s) laisse(nt) un espace libre (8) dans la cellule (1); puis
c) on assemble les dernières parois définissant la cellule (1) pour fermer celle- ci ;
d) on répète les étapes a), b), c) le nombre de fois nécessaires pour fabriquer toutes les cellules (1) de l'enceinte ; chaque cellule étant pourvue d'un ou de plusieurs orifices pratiqués dans ses parois pour faire entrer ou sortir l'hydrogène dans la cellule ; puis
e) on ferme l'enceinte ;
f) on introduit de l'hydrogène dans l'enceinte moyennant quoi on transforme le ou les morceau(x) massif(s) (7) de matériau dans chacune des cellules (1) en la poudre d'hydrure métallique (6) ;
g) on répète éventuellement l'étape f) ;
les étapes b), c), d), et e) étant réalisées sous une atmosphère protectrice, dans une enceinte fermée.

2. Procédé selon la revendication 1 dans lequel le ou les morceau(x) massif(s) (7) du matériau susceptible de former un hydrure métallique a(ont) la forme d'un polyèdre.

3. Procédé selon la revendication 2 dans lequel le ou les morceau(x) massif(s) (7) du matériau susceptible de former un hydrure métallique a(ont) la forme d'un parallélépipède, de préférence d'un parallélépipède rectangle.

4. Procédé selon l'une quelconque des revendications précédentes dans lequel le ou les morceau (x) massif(s) (7) du matériau susceptible de former un hydrure métallique est(sont) découpé(s) à partir d'un bloc, lingot massif de plus grande taille à des dimensions adaptées à chaque cavité, de préférence dans une atmosphère protectrice.

5. Procédé selon l'une quelconque des revendications précédentes dans lequel le ou les morceau (x) massif(s) (7) est(sont) soumis à un usinage mécanique dans une atmosphère protectrice, préalablement à l'étape b).

6. Procédé selon la revendication 5 dans lequel ledit usinage mécanique est un meulage, un tronçonnage, un découpage, un grattage, un décapage, un limage, un tournage, un fraisage, un ponçage ou une combinaison de ceux-ci.

7. Procédé selon l'une quelconque des revendications précédentes dans lequel le matériau susceptible de former un hydrure métallique est choisi parmi les composés intermétalliques AB5, AB2, A2B, AB3, A2B7, A2B17 comme les TiFe, LaNi5, Mm-Ni, Ti-Cr, CaNi5, Ti-Cr, Ti-Mn, Zr-Mn, Ti-Mn-V, Zr-Fe-Cr, Ti-Zr-V, Ti-Fe-Mn, Ti-Fe-Ni ; les matériaux en solution solide à structure BCC, par exemple dans le Vanadium, tels que V-Ti-Fe, ou V-Ti-Cr ; les métaux purs tels Mg, Be, Ti, Zr, V, La, U, Y ; les alliages de métaux, comme les alliages de magnésium tels que Mg-Ni, Mg-Cu ; et les mélanges de deux matériaux, ou plus, parmi les matériaux énumérés dans ce qui précède.

8. Procédé selon l'une quelconque des revendications précédentes dans lequel l'espace libre (8) dans chaque cellule représente au moins 20% du volume de la cellule, de préférence de 20 à 50%, de préférence encore de 20 à 30%.

9. Procédé selon l'une quelconque des revendications précédentes dans lequel la poudre d'hydrure métallique (6) est en contact avec toutes les parois (2, 3, 4, 5) de la cellule élémentaire (1) qui la contient.

10. Procédé selon l'une quelconque des revendications précédentes dans lequel l'ensemble des parois des cellules (1) forme un échangeur thermique.

11. Procédé selon l'une quelconque des revendications précédentes comprenant en outre une étape de montage de canalisations, d'amenée et d'évacuation de l'hydrogène (9) et une étape de montage de canalisations de transport d'un fluide caloporteur (10) .

## Patentansprüche

1. Verfahren zum Herstellen eines Tanks zum Speichern von Wasserstoff in einem Metallhydridpulver, enthaltend einen geschlossenen Behälter, der in geschlossene Elementarzellen (1) untergeteilt ist, die durch Zellwände (2, 3, 4, 5) definiert sind, wobei jede der Zellen (1) Metallhydridpulver (6) enthält, **dadurch gekennzeichnet, dass** jede der Zellen (1) aufeinanderfolgend durch Ausführen der nachstehenden Schritte a), b) und c) hergestellt wird:
a) Zusammenfügen von bestimmten, jedoch nicht von allen Zellwänden, die die Zelle (1) definieren, um somit einem offenen Hohlraum bzw. eine offene Alveole zu bilden; dann
b) Einsetzen von einem oder mehreren massiven Stücken (7) eines Materials, das ein Metallhydrid bilden kann, in den Hohlraum bzw. Alveole, wobei das oder die massive Stücke des Materials kompakt ist/sind und nicht insbesondere aus der Agglomeration mehrerer Teilchen besteht/bestehen, und das Volumen des bzw. der massiven Stücke (7) derart ist, dass es/sie einen Freiraum (8) in der Zelle (1) freilässt/freilassen; dann
c) Zusammenfügen der die Zelle (1) definierenden letzten Zellewände, um diese zu verschließen;
d) Wiederholen der Schritte a), b), c) sooft wie dies erforderlich ist, um alle Zellen (1) des Behälters herzustellen; wobei jede Zelle mit einer oder mehreren Öffnungen versehen ist, die in ihre Zellwände eingebracht sind, um den Wasserstoff in die Zelle einzuleiten oder daraus auszuleiten; dann
e) Verschließen des Behälters;
f) Einleiten von Wasserstoff in den Behälter, wodurch das bzw. die massiven Stücke (7) des Materials in jeder der Zellen (1) in Metallhydridpulver (6) umgewandelt wird/werden;
g) gegebenenfalls Wiederholen von Schritt f);
wobei die Schritte b), c), d) und e) in einem geschlossenen Behälter unter Schutzatmosphäre erfolgen.

2. Verfahren nach Anspruch 1, wobei das bzw. die massiven Stücke (7) des Materials, das ein Metallhydrid bilden kann, in Form eines Polyeders vorliegt/vorliegen.

3. Verfahren nach Anspruch 2, wobei das bzw. die massiven Stücke (7) des Materials, das ein Metallhydrid bilden kann, in Form eines Parallelepipeds, vorzugsweise eines rechtwinkligen Parallelepipeds, vorliegt/vorliegen.

4. Verfahren nach einem der vorangehenden Ansprüche, wobei das bzw. die massiven Stücke (7) des Materials, das ein Metallhydrid bilden kann, ausgehend von einem größeren massiven Block, einem größeren massiven Barren geschnitten wird/werden, auf Abmessungen die auf jede Vertiefung abgestimmt sind, vorzugsweise unter Schutzatmosphäre.

5. Verfahren nach einem der vorangehenden Ansprüche, wobei das bzw. die massiven Stücke (7) vor dem Schritt b) einer mechanischen Bearbeitung unter Schutzatmosphäre ausgesetzt wird/werden.

6. Verfahren nach Anspruch 5, wobei die mechanische Bearbeitung ein Schleifen, Abtrennen, Schneiden, Schaben, Scheuern, Feilen, Drehen, Fräsen, Schmirgeln oder eine Kombination davon ist.

7. Verfahren nach einem der vorangehenden Ansprüche, wobei das Material, das ein Metallhydrid bilden kann, ausgewählt ist aus den intermetallischen Verbindungen AB5, AB2, A2B, AB3, A2B7, A2B17, wie TiFe, LaNi5, Mm-Ni, Ti-Cr, CaNi5, Ti-Cr, Ti-Mn, Zr-Mn, Ti-Mn-V, Zr-Fe-Cr, Ti-Zr-V, Ti-Fe-Mn, Ti-Fe-Ni; Materialien in fester Lösung mit BCC-Struktur, beispielweise in Vanadium, wie etwa V-Ti-Fe ou V-Ti-Cr; reinen Metallen wie Mg, Be, Ti, Zr, V, La, U, Y; Metalllegierungen, wie Magnesiumlegierungen, wie etwa Mg-Ni, Mg-Cu; und den Gemischen aus zwei oder mehreren Materialien aus den vorangehend aufgezählten Materialien.

8. Verfahren nach einem der vorangehenden Ansprüche, wobei der Freiraum (8) in jeder Zelle zumindest 20 % des Volumens der Zelle, vorzugsweise 20 bis 50 %, noch bevorzugter 20 bis 30 %, einnimmt.

9. Verfahren nach einem der vorangehenden Ansprüche, wobei das Metallhydridpulver (6) mit allen Zellwänden (2, 3, 4, 5) der Elementarzelle (1), die dieses enthält, in Kontakt steht.

10. Verfahren nach einem der vorangehenden Ansprüche, wobei die Gesamtheit der Zellwände der Zellen (1) einen Wärmetauscher bildet.

11. Verfahren nach einem der vorangehenden Ansprüche, ferner umfassend einen Schritt des Anbringens von Leitungen zum Zu- und Abführen von Wasserstoff (9) und einen Schritt des Anbringens von Leitungen zum Fördern einer Wärmeträgerflüssigkeit (10).

## Claims

1. A method for manufacturing a storage tank for storing hydrogen in a metal hydride powder, comprising a closed enclosure divided into closed elementary cells (1) defined by walls (2, 3, 4, 5), each of the cells (1) containing metal hydride powder (6), **characterized in that** each of the cells (1) is successively manufactured by carrying out the following steps a), b) and c):
a) Certain, but not all the walls defining the cell (1) are assembled in order to thereby form an open cavity or alveolar cell; and then
b) one or more massive (solid) piece (s) (7) of a material capable of forming a metal hydride are placed in said cavity or alveolar cell, the massive piece(s) of the material being compact and being notably not formed by the agglomeration of several particles, and the volume of the massive piece(s) (7) being such that it (they) leave(s) a free space (8) in the cell (1); and then
c) the last walls defining the cell (1) are assembled in order to close said cell;
d) steps a), b), c) are repeated for the number of times required for manufacturing all the cells (1) of the enclosure; each cell being provided with one or more opening(s) made in its walls in order to make hydrogen enter or exit the cell; and then
e) the enclosure is closed;
f) hydrogen is introduced into the enclosure, whereby the massive piece (s) (7) of material in each of the cells (1) is(are) transformed into the metal hydride powder (6) ;
g) step f) is optionally repeated;
steps b), c), d), and e) being carried out under a protective atmosphere, in a closed enclosure.

2. The method according to claim 1 wherein the massive piece(s) (7) of the material capable of forming a metal hydride has(have) the shape of a polyhedron.

3. The method according to claim 2 wherein the massive piece(s) (7) of the material capable of forming a metal hydride has(have) the shape of a parallelepiped, preferably a rectangular parallelepiped.

4. The method according to any one of the preceding claims, wherein the massive piece(s) (7) of the material capable of forming a metal hydride is(are) cut out from a massive (solid) block, ingot of a larger size to dimensions adapted to each cavity, preferably under a protective atmosphere.

5. The method according to any one of the preceding claims wherein the massive piece(s) (7) is(are) subject to mechanical machining under a protective atmosphere, prior to step b).

6. The method according to claim 5 wherein said mechanical machining is grinding, severing, cutting, scrapping, stripping, filing, turning, milling, sanding or a combination thereof.

7. The method according to any one of the preceding claims wherein the material capable of forming a metal hydride is selected from intermetallic compounds AB5, AB2, A2B, AB3, A2B7, A2B17 like TiFe, LaNi5, Mm-Ni, Ti-Cr, CaNi5, Ti-Cr, Ti-Mn, Zr-Mn, Ti-Mn-V, Zr-Fe-Cr, Ti-Zr-V, Ti-Fe-Mn, Ti-Fe-Ni; from materials in solid solution with a BCC structure, for example in Vanadium, such as V-Ti-Fe, or V-Ti-Cr; pure metals such as Mg, Be, Ti, Zr, V, La, U, Y; metal alloys, like magnesium alloys such as Mg-Ni, Mg-Cu; and mixtures of two materials, or of more than two materials, from the materials listed in the foregoing.

8. The method according to any one of the preceding claims wherein the free space (8) in each cell accounts for at least 20% of the volume of the cell, preferably from 20 to 50%, still preferably from 20 to 30%.

9. The method according to any one of the preceding claims wherein the metal hydride powder (6) is in contact with all the walls (2, 3, 4, 5) of the elementary cell (1) which contains it.

10. The method according to any one of the preceding claims wherein the whole of the walls of the cells (1) forms a heat exchanger.

11. The method according to any one of the preceding claims further comprising a step for mounting feed and discharge conduits for hydrogen (9) and a step for mounting conduits for conveying a heat transfer fluid (10).
